Europäisches Patentamt

European Patent Office

Office européen des brevets

(19)

(11) **EP 1 359 320 A1**

(12) **EUROPEAN PATENT APPLICATION**

(43) Date of publication:
**05.11.2003 Bulletin 2003/45**

(51) Int Cl.7: **F03D 1/04**, F03D 3/04

(21) Application number: **02008032.1**

(22) Date of filing: **10.04.2002**

(84) Designated Contracting States:
**AT BE CH CY DE DK ES FI FR GB GR IE IT LI LU MC NL PT SE TR**
Designated Extension States:
**AL LT LV MK RO SI**

(71) Applicant: **Grassmann, Hans**
**34100 Duino Aurisina (TS) (IT)**

(72) Inventor: **Grassmann, Hans**
**34100 Duino Aurisina (TS) (IT)**

(74) Representative: **Hirsch, Peter, Dipl.-Ing.**
**Klunker Schmitt-Nilson Hirsch**
**Winzererstrasse 106**
**80797 München (DE)**

(54) **Shrouded fluid flow turbine**

(57) A device is disclosed for extracting energy from a fluid flow passing in a first direction, comprising at least one turbine (20) embedded in the fluid flow, the fluid flow maintaining a pressure difference between the input end of the turbine and the output end of the turbine; the turbine being at least partially shielded by a flow shroud means (216); said flow shroud means effecting an increase of said pressure difference by causing a partial area of the cross section of the total fluid flow to bypass the turbine; the bypassing flow being deflected by said flow shroud means into a second direction different from the first direction; and said flow shroud means consisting of at least one flow shroud means element shaped like a sail or similar means.

Figure 2b

( Variant I )          ( Variant II )

Printed by Jouve, 75001 PARIS (FR)

## Description

The invention relates to a device for extracting energy from a fluid flow.

From patent document EP-A2-0.935.068 a device and a method has come to be known which allows to increase the power of a wind or water turbine by means of wing profiled structures which are arranged around the turbine. The wing structures create a field of low pressure behind the turbine. However, a wing profile is relatively difficult and expensive to construct, and this expense may limit the use of the technologies known from said document.

Hence, it is an object of the present invention to provide more simple structures which are cheaper in construction but which nonetheless will achieve the purpose of creating a field of low pressure behind the turbine. In particular, it is an object of the present invention to provide an improved device for extracting energy from a fluid flow which is reliable but cheaper.

This object is solved in accordance with the invention by the subject-matter of the independent claims 1, 3, and 4.

A wing (for instance of an aeroplane) in a flow of fluid creates regions of high and of low pressure. The force acting on the wing can be subdivided into two forces Fp and Fr, where Fr points into the direction of the ambient air flow and Fp points in the direction normal to it. In general, it is desired to have a high ratio of Fp/Fr, i.e., a high force which pulls the wing upwards and a force as small as possible resisting the movement of the wing through the air. A sail or simply a plate create fields of low and of high pressure similar to what a wing does, but in general they show a smaller ratio of Fp/Fr. For instance, an aeroplane would also be able to fly when utilising flat plates as wings but it then would need a much stronger engine to overcome the increased force Fr.

Instead of surrounding a turbine with a system of wing profiled structures it is possible to insert it into a system of sail like structures or in a shroud, which has the profile of a plate. As a consequence the cost of construction for the device can be lowered.

In the past certain fluido-dynamical systems have come to be known in order to improve the power of a turbine. All of these systems can be classified and do indeed classify themselves either as "diffuser" systems or as "venturi tube" systems. For example Document US-A-4,075,500 discloses a diffuser augmented wind turbine. From Document US-A-5,464,320 a superventuri power source has come to be known. However, solution according to the present invention is neither a diffuser nor a venturi tube, as shall be quantified as set out below.

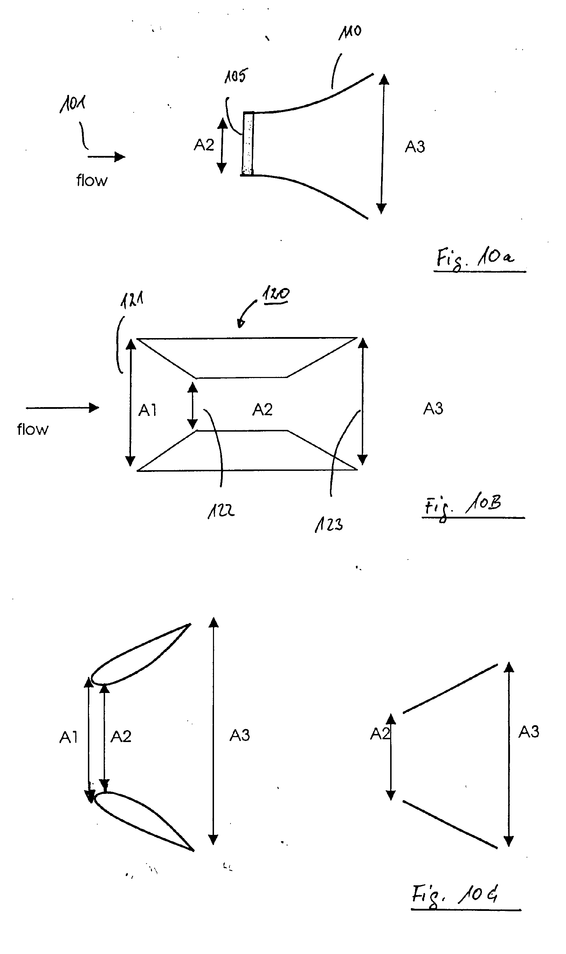

In **Fig. 10a,** a flow 101 passes through a turbine 105 of area A2 and afterwards expands to a cross section with area A3. A diffuser 110 is applied in order to define the value of A3. This can be useful in order to minimise the kinetic energy at the outflow of the device 110 (where it has area A3) and to increase thereby the pressure drop at the turbine 105. In difference to the solution in accordance with the present invention, a diffuser acts only on the flow which passes through the turbine and it does not extract energy from an additional flow of fluid which does not pass the turbine.

**Fig. 10b** shows a venturi tube 120 having an opening 121 with area A1, a narrow section 122 of area A2 and finally opens to a section 123 of area A3. The flow through the venturi tube 120 has a velocity such that the product of velocity and cross section remains constant throughout the device.

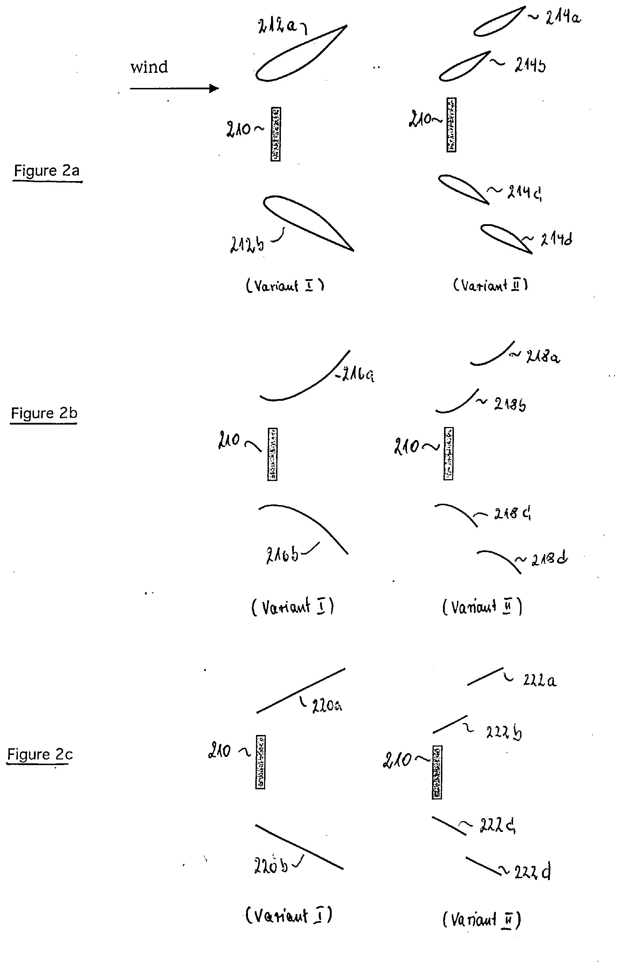

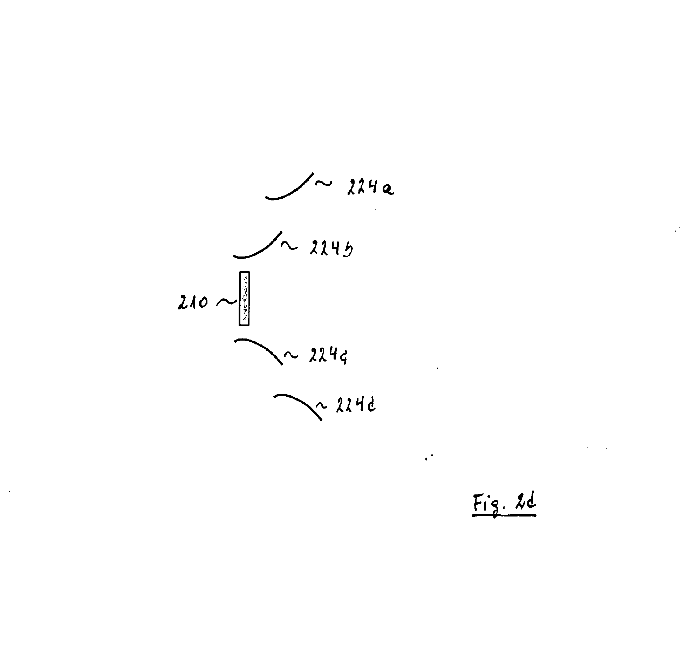

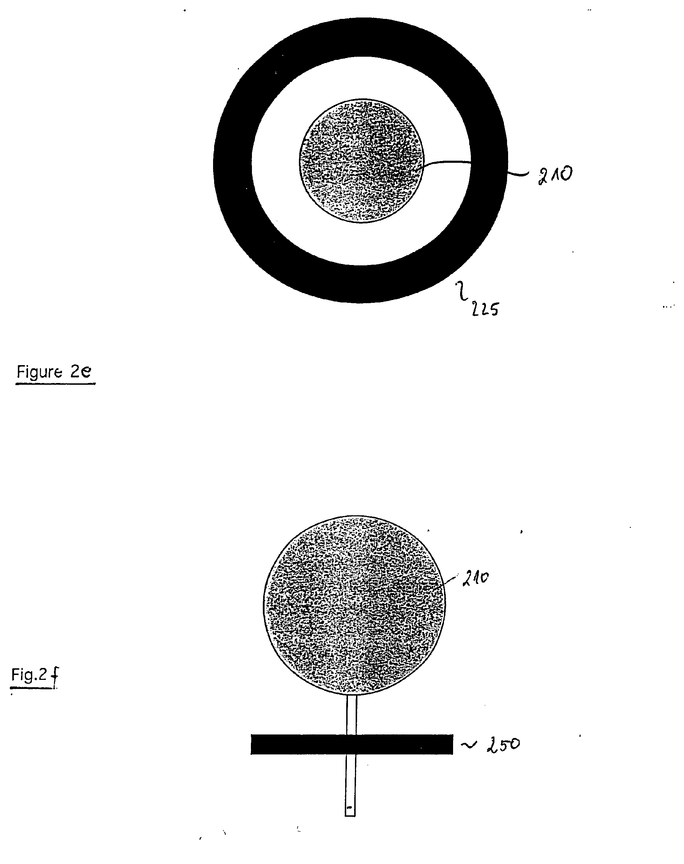

In the narrow section 122 the velocity of the fluid increases because the cross section of the flow is small there. In difference to this, when utilising the solution according to the present invention the velocity of the flow gets increased because the flow changes its direction, not because it changes its cross section. For demonstration in **Fig. 10c** indication is made for cross sections A1, A2 and A3 for a turbine with wing shaped shroud (as in our figure 2a) or with a plate profiled shroud (as in **Fig. 2c**)

For figure 2a, A1 is only slightly larger than A2. In figure 2c, A1 cannot even be defined, since the device is not narrowing in the direction of the flow at any point.

If the flow has a mean velocity of v1 at the inflow of the shroud (with sectional area A1) and if the narrow section has area A2, than for a venturi tube the velocity of the flow in the narrow section will be $v2=v1*(A1/A2)$ in mean, and nowhere in the narrow section will the actual velocity deviate very much from this mean value.

Hence, the present invention is related to a technical teaching where a flow is not or not only accelerated due to a narrowing of its cross section, but rather due to a change in its direction.

This difference is not just representing some technical modification of a potentially functioning device but rather it is the difference between a device which by its principles in physics cannot enhance efficiency and another one which can.

Venturi channels cannot produce energy: First, Documents like US-A-5,464,320 disclose prior art technical teachings relying on a certain hope that the high velocity air in the narrow section of a venturi tube should due to its large velocity have a higher energy content. This is, however, not true; the increase in kinetic energy is totally compensated by a decrease in internal energy (pressure) and, hence, the energy density of the air does not change. Secondly, air in the narrow section of a venturi tube is in equilibrium. It is not possible to extract energy from a flow of air which has been accelerated by the venturi principle. As a consequence, Document US-A-5,464,430 correctly states that all past attempts to increase the power of a turbine by means of a venturi tube have failed and that the venturi tube as such cannot help to increase the power of any turbine. This Document expresses an opinion according to which this shortcoming could be compensated by a sequence of several different turbines inserted into a venturi system. But even this modest expectations could not be verified due to their inherent conceptual problems.

In a preferred embodiment the mass flow through the entire system of shroud and turbine is then at least 20% larger than the flow which passes through the turbine.

If only a part of the turbine is covered by a shroud system, then this value of 20% refers to the covered region of the turbine only: if a fraction of $\alpha$ of the outer circumference of the turbine is covered by a shroud, then the mass flow through the turbine plus the mass flow between turbine and shroud within the solid angle $\alpha$ covered by the shroud must be at least $1.2 \cdot \alpha$ of the flow through the turbine alone.

Still more preferred is an embodiment where, if the device has an inflow cross section of A1 and a narrow section of area A2, and where the flow enters the inflow at velocity v1, the velocity of the flow in the narrow section is at least 20% larger than v1*(A1/A2) close to the wall of the shroud.

The invention will now be explained more in detail by referring to a number of embodiments, thereby using the drawing:

**Fig. 1a** shows a cross section of a wing.

**Fig. 1b** shows a cross section of a sail.

**Fig. 1c** shows a cross section of a flat plate.

**Fig. 1d** shows how a wing is composed of two surfaces.

**Fig. 2a** shows a cross section through the centre of a turbine with one and a turbine with two wing profiled structures arranged around it.

**Fig. 2b** shows the corresponding situation for one and for two sail profiled structures.

**Fig. 2c** shows the corresponding situation for one and for two shrouds with a plate profile.

**Fig. 2d** shows an arrangement of a turbine with two shrouds, where in difference to Figs. **2a, 2b, 2c** there is no space between the propeller tips and the wall of the inner shroud.

**Fig. 2e** shows a front view (looking along the x-axis which is parallel to the direction of the ambient wind) of a propeller with a (wing- or sail or plate profiled) shroud around it.

**Fig. 2f** shows a front view (looking along the x-axis) of a wind turbine which has a supporting wing structure only on one of its sides.

**Fig. 3a** shows a cross section through a flow of air or water, where the flow is limited by walls which are shaped like a sail and a turbine which is positioned in the flow in relation to these sail shaped walls.

**Fig. 3b** shows a cross section through a flow of air or water, where the flow is limited by walls which are shaped like a sail. In difference to **Fig. 3a**, a shrouded turbine is placed in relation to these sail shaped wall, instead of a bare turbine.

**Fig. 3c** as **Fig. 3a,** but now there is no narrowing of the flow upstream of the turbine.

**Fig. 4** shows a compromise solution between the scenario where sail structures are used and the scenario with plates. Bent plates are used, as can be obtained from slicing a tube.

**Fig. 5** shows how plates are combined in order to approximate a sail shape.

**Fig. 6** shows how a sequence of many small structures (as shown in figure 5) is obtained from punching a single large plate.

**Fig. 7** shows a situation where several turbines are inserted into one common shroud structure.

**Fig. 8** shows a system consisting of a turbine with its axis normal to the direction of the flow and a sail structure on the side of the turbine.

**Fig. 9** shows a partial cross section through a turbine and a shroud element.

**Fig. 10** shows in **Fig. 10a** a schema of a diffuser system, in **Fig. 10b** a schema of a Venturi system, and in **Fig. 10c** a schema in accordance to the present invention.

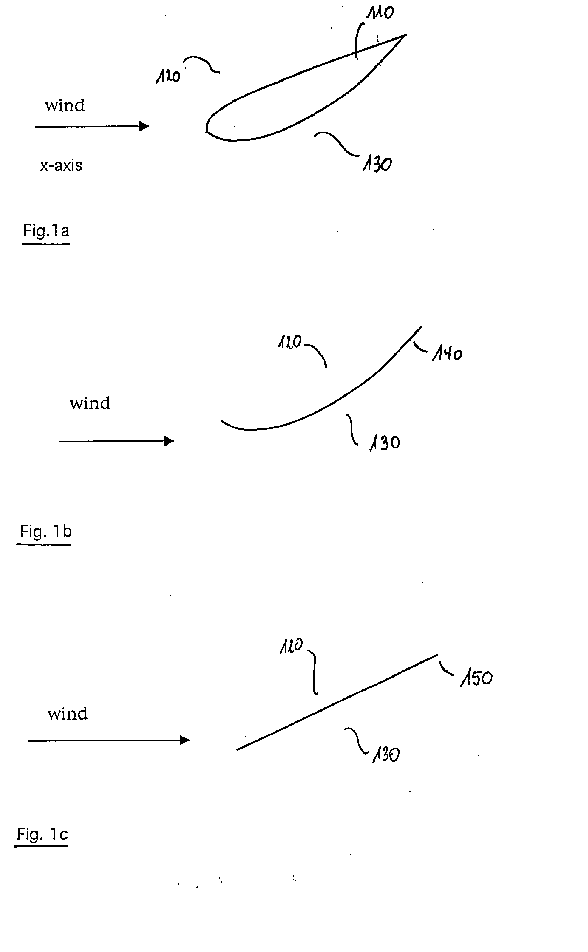

**Fig. 1a** shows a cross section through a wing 110. Air is moving along the direction of the x-axis. Due to its shape the wing 110 will create regions 120, 130 in the air flow with high pressure and with low pressure, respectively, as indicated in the **Fig.** The same is true for a structure 140 having the shape of a sail, as shown in **Fig. 1b** or for a plate 150, as shown in **Fig. 1c.** In each case regions 120, 130 of high and of low pressure, respectively, will build up, as indicated in the figure.

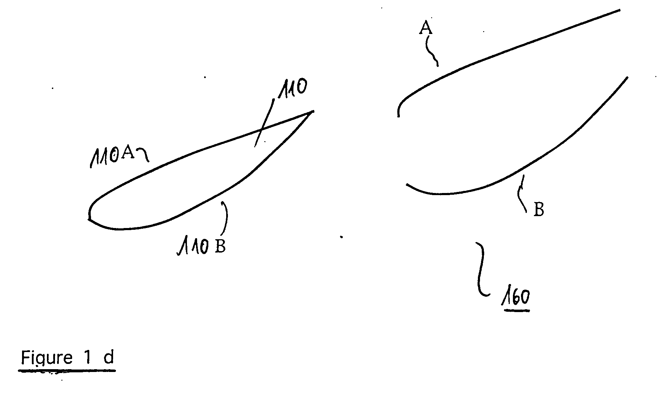

**Fig. 1d** then illustrates a wing 110 made of at least two surfaces (reference signs 110A and 110B), while instead a sail structure 160 needs only one of these two surfaces.

Therefore a sail-like structure needs less material for its construction and possibly less labour.

Aeroplanes in general use wing profiles because this shape has least resistance to the airflow. But also sails or sail shaped surfaces can be used in order to create a force in a flow of air like, for instance, in sail ships or in hang gliders. Kites instead have the shape of a simple plate because this is a very simple and cheap way of construction; still they fly.

**Fig. 2a** shows a wind turbine 210 with either a single wing profiled structure 212a, 212b ("Variant I") or with two wing profiled structures 214a, 214b, 214c, 214d ("Variant II") around the turbine 210. This arrangement is as suggested in the patent document EP-A2-0.935.068. A fluido-dynamical simulation and a three dimensional view of such a system has come to be known from F. Bet, H. Grassmann, "Upgrading conventional wind turbines", to be published in "Renewable Energy", Elsevier. By measurements verification has been made that indeed the wing(s) create(s) a field of low pressure behind the turbine, thereby increasing its power.

Following the arguments made in conjunction with the description of **Fig. 1**, the wing profiled shroud 212a, 212b; 214a, 214b, 214c, 214d can be replaced by a more simple structure, in particular by a structure 216a, 26b like a shroud with elements 216a, 26b or 218a, 218b, 218c, 218d having a cross section shaped like a sail, as shown in **Fig. 2b,** or with elements 220a, 220b or 222a, 222b, 222c, 222d having the shape of a flat plate, as shown in **Fig. 2c. Fig. 2d** shows an arrangement of a turbine 210 with two shrouds 224a, 224d and 224b, 224c where in difference to the arrangements of **Figs. 2a, 2b, 2c** there is no space between the propeller tips and the wall of the inner shroud **224b, 224c.**

The wing profiled structure or sail profiled structure or plate profiled structure 225 is bent around the propeller 210 as shown in **Fig. 2e**.

Also the plate profiled structure or the sail profiled structure will create a field of low pressure behind the propeller of the wind turbine and so increase the power of the turbine. The important difference between the structure shown in **Fig. 2a** and the structure in **Fig. 2b** and **Fig. 2c** is in the expected cost of construction of such devices.

A system seemingly similar to what is shown in **Fig. 2b** has come to be known from patent document US-A1-4,075,500. However, the position of the shroud and its function in US-A1-4,075,500 and the present inventive solution are different.

In US-A1-4,075,500 the shroud leaves little space between its inner surface and the propeller, it explicitly is supposed to act as a diffuser on the stream of air, which flows through the propeller (the title of patent US-A1-4,075,500 says "diffuser augmented wind turbine"). While in the device presented here energy is extracted from a flow of air, which does not pass through the propeller, the shroud does not act as a diffuser.

This additional flow of air (which does not pass through the propeller) is about as large or larger than the flow through the propeller itself. The physics reason for this arrangement is, that the energy extracted from this additional flux of air is needed to maintain the field of low pressure behind the turbine. These differences in structure and function between US-A1-4,075,500 and the device presented here lead to a significant difference in performance. While the here presented system is properly functioning in a fluido-dynamical simulation, the system US-A1-4,075,500 is not, and also the Vortec company, New Zealand, failed to get the design working in a series of prototypes.

The wing profiled structure or sail profiled structure or plate profiled structure 215 is bent around the propeller 210 as shown in **Fig. 2e**.

A sail profiled shroud does not necessarily need to be made of cloth. It could be made of cloth, of course, and be kept in shape by some metal support structure similar to how an umbrella is made. But it could be as well made of metal or plastic or any other material.

For **Figs. 2a, 2b,** and **2c** it is assumed that the wing (or sail or plate) profiled shroud has rotational symmetry around the axis of rotation of the wind turbine, as shown in **Fig. 2e**. However, different geometrical configurations are possible as well, for instance the wings can form a hexagon around the propeller or simply a square (not depicted). But also putting a wing only on one side (or on some of the sides) of a propeller will increase the power of the turbine. Putting a wing only on part of the circumference of a propeller is of particular interest for very large size turbines which may have diameters of 30 meters or more: The velocity of the air increases with height above ground; therefore a large propeller will be exposed to air of higher speed high above ground, and of lower speed in the region close to ground.

Hence, two disadvantages may result: First, the blade of the propeller cannot always be optimally efficient since its angle with respect to the air flow changes continually. Secondly, the forces acting on the turbine will have an oscillating component, which causes additional mechanical stress on the device.

In **Fig. 2f** a turbine 210 is shown with a wing 250 only at its lower part. The wing 250 will effectively increase the velocity of the wind flowing through the propeller 210 in the lower part of the propeller. In **Fig. 2f** the wing 250 is straight in the horizontal direction but it could as well be bent; for instance it could follow the circumference of the propeller 210. It is further noted that the inclination of the wing structure or sail structure or plate structure with respect to the flow direction and also the position of the shroud with respect to the turbine 210 may be arranged to be changeable during operation of the device.

Configurations with one or two shrouds are shown in **Fig. 2** but the shroud system can also be composed of any larger number of substructures.

With regard to the various arrangements as illustrated in **Fig. 2**, the whole device (turbine plus entire shroud system) is embedded in the flow, both the inner and the outer side of the shroud structure(s) being in contact with the fluid.

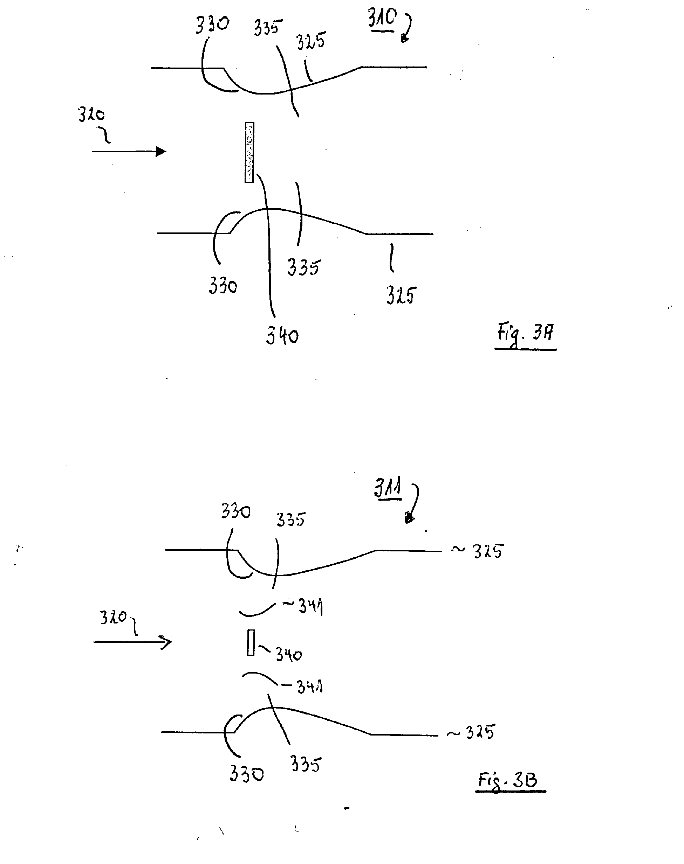

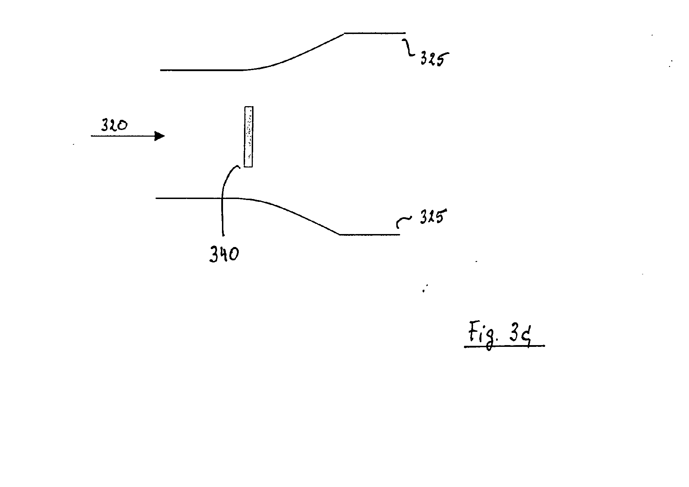

In **Fig. 3a** a configuration 310 is shown where a flow 320 is contained by walls 325, and these walls 325 at some point 330 are shaped like sails, their bend surface producing a field 335 of low pressure behind a turbine 340 which is inserted in the flow 320. In difference to **Fig. 2**, only the "inner side" of the sail is now in contact with the fluid. **Fig. 3b** shows a similar configuration 311, now the turbine 340 inserted into the flow is equipped with a shroud 341 exhibiting s sail-like form.

In **Figs. 3a, 3b** the flow 320 is narrowing upstream of the turbine. This is a realistic scenario which corresponds to the situation of a river with large cross section entering the device. However, this narrowing is not necessary for the functioning of the device, since the device does not act as a venturi tube. For demonstration a configuration is shown in **Fig. 3c** which corresponds to the situation shown in **Fig. 3a**, but without any narrowing of the flow upstream of the turbine. The configuration **Fig. 3c** will work, too.

**Fig. 3** can be seen as representing the situation of a flow 320 in a tube 325 in which case the Fig. shows a device which may be symmetric around the longitudinal axis in flow direction. But the flow 320 can as well be open at its upper side instead of being enclosed; such variant would correspond to the structure of a river. In this case **Fig. 3** could also be read as representing a view from above on the flow 320 with the side walls 325 of the flow being sail-shaped. Also the bottom of the flow 320 may have this sail shape.

From an aerodynamic point of view a sail shaped surface is superior over a simple plane but it may be inferior from a point of view of construction cost.

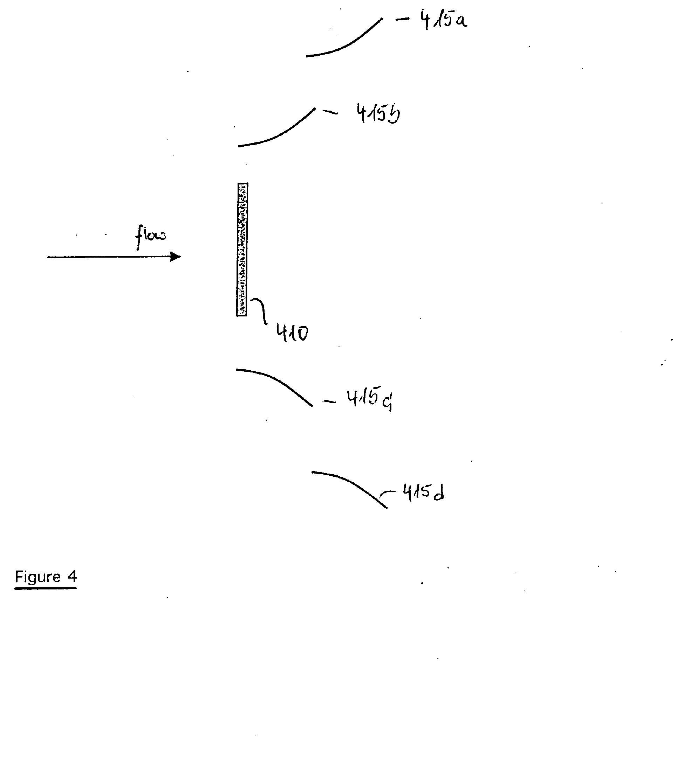

Depending on the construction material and of the application, the best compromise may not be either of these "extreme" solutions but a compromise solution somewhere in between, for instance, surfaces might be utilised which are bent but not in a way as as a sail is. That is shown in **Fig. 4**, where elements 415a, 415d and 415b, 415c surrounding a propeller 410 have a shape which approximates that of a segment of a circle and can e.g. be obtained from slicing tubes.

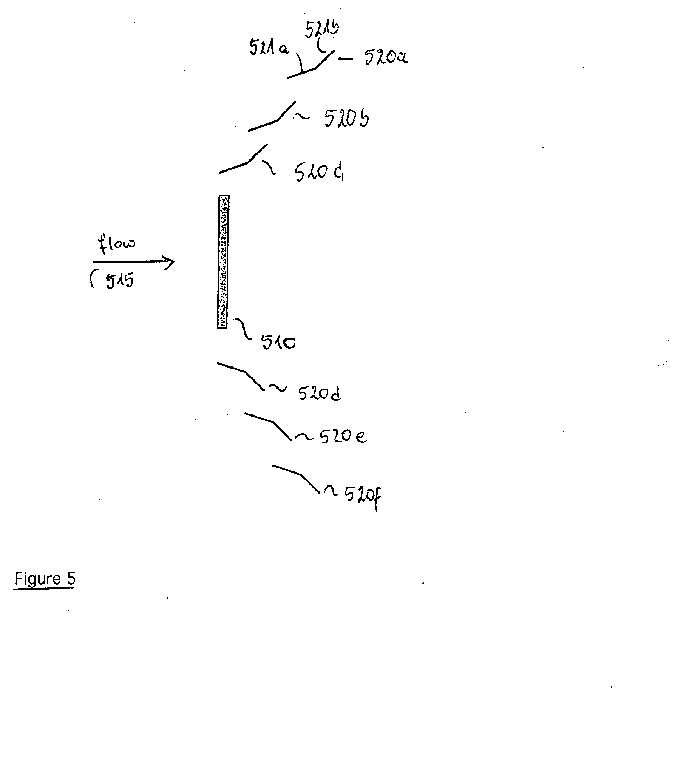

Another way to approximate a sail shape is to combine two planes as shown in **Fig. 5.** In this embodiment a flow passes a turbine 510 surrounded by shrouds 520a, 520f and 520b, 520e as well as 520c, 520d, each exhibiting two plane areas 521a, 521b having a predetermined angle in between.

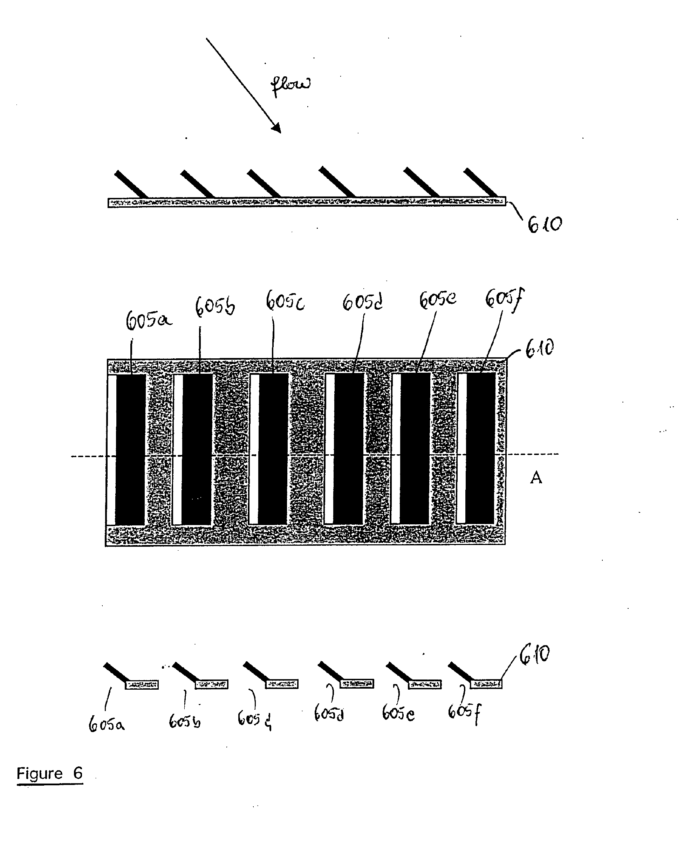

Another way of saving construction cost can be to form a shroud system by punching openings 605a-f into a plate 610 like a sheet of metal in a way as shown in **Fig. 6.** These large punched plates can then easily be arranged around the propeller in any chosen way.

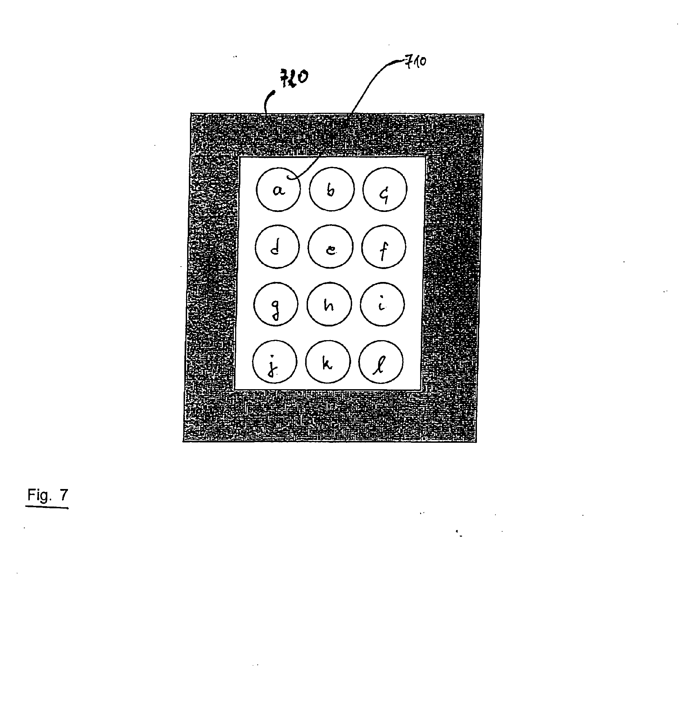

Instead of mounting a single wind turbine inside a shroud system of its own a large number of turbines 710a can be combined into one shroud 720 common to all of them as shown in **Fig. 7**. The system is viewed along the direction of the flow (x-axis). In the drawing the shroud 720 is assumed to consist of one wing structure but it could as well consist of several ones (as shown in **Fig. 2, 3**).

Systems as described in **Figs. 1** to **7** can operate in air or steam as well as in water. They can be applied in situations where only kinetic energy is extracted from the flow, or (particularly when the device is operated in water) where also potential energy is extracted.

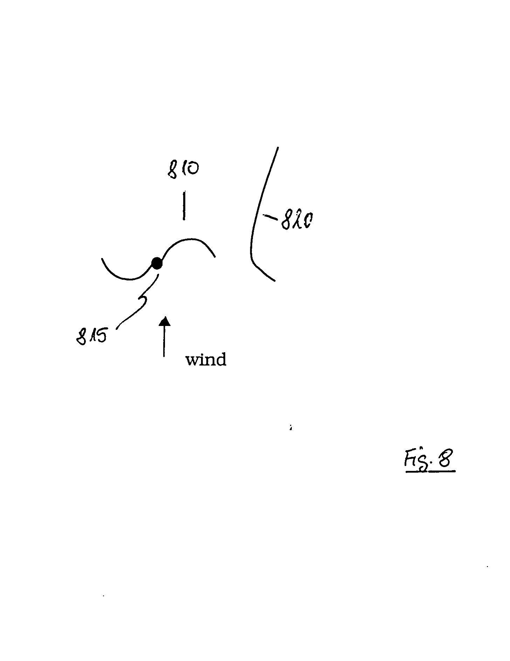

In all **Figs.** turbines which have their axis in parallel to the direction of the flow have been shown for demonstration. However, for this invention the orientation of the axis of the turbine is not relevant. In **Fig. 8** we show a view from above on a wind turbine 810 with a vertical axis 815. At its side there is a sail structure 820. **Fig. 8** is also representing a water turbine with a sail structure, in this case the view is from the side instead from above. Of course, also a wind turbine could be installed with a horizontal axis which is normal to the direction of the wind.

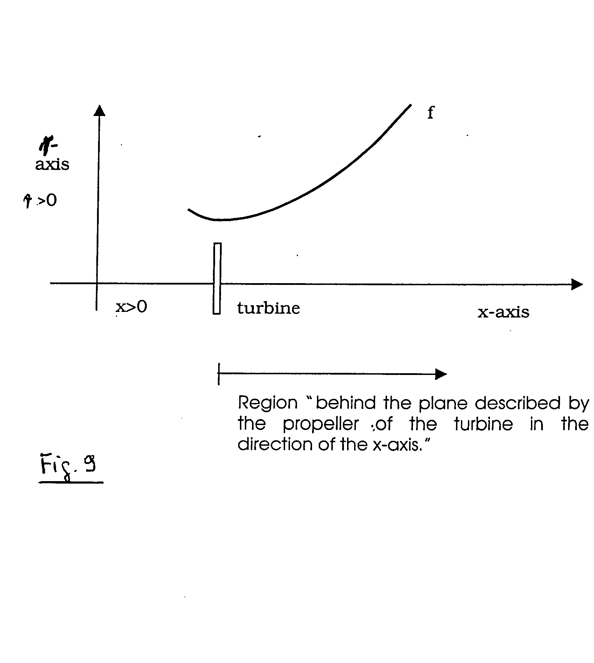

**Fig. 9** shows a partial cross section through a turbine and a shroud element. Various possibilities of how to shape the wing structure have been discussed for the purpose of illustration in a qualitative way.

A more precise and general description can be given as follows : the wing system can consist of either

(a) plates or

(b) bent surfaces or of

(c) any combination thereof.

In case (a) the requirement is that the shroud is widening in the direction of the flow.

In case (b) - for a cross section through the device (as in **Fig. 2**) and with the x-axis (direction of ambient air flow) and an radial axis oriented as shown in **Fig. 9**, and with a function f(x) which is describing the shape of the surface (sail) or the inner surface (wing profile) of the shroud -, the requirement is : the second derivative off,

$$d^2f/dx^2 > 0$$

at least for a part of the shroud behind the plane described by the propeller of the turbine in the direction of the x-axis.

In a free flow of air or water, only the kinetic energy of the fluid can be extracted because of before and at some distance after the device the pressure of the fluid will be the same. That amounts to saying that the pressure drop in the turbine cannot be made larger than the amount corresponding to that kinetic energy. The pressure drop in a turbine increases with the speed of the flow through the turbine.

Therefore, if a large increase in the flow through the turbine (by means of a shroud structure) is to be achieved, then not a conventional propeller but instead one which causes a relatively small pressure drop at a given velocity, compared to a conventional propeller, is to be used.

The shroud system around the propeller will cause a very large increase of power only if a propeller with corresponding properties is used in the turbine. Trivially, also in a turbine which operates in a tube or a river, the properties of the turbine must be chosen in correspondence to the chosen mass flow and pressure drop, as is routinely done in present technology.

## Claims

1.   Device for extracting energy from a fluid flow passing in a first direction,

a) comprising at least one turbine embedded in the fluid flow, the fluid flow maintaining a pressure difference between the input end of the turbine and the output end of the turbine;

b) the turbine being at least partially shielded by a flow shroud means;

c) said flow shroud means effecting an increase of said pressure difference by causing a partial area of the cross section of the total fluid flow to bypass the turbine;

d) the bypassing flow being deflected by said flow shroud means into a second direction different from the first direction; and

e) said flow shroud means consisting of at least one flow shroud means element shaped like a sail.

2.   Device for extracting energy from a fluid flow according to claim 1, **characterised in that** the function f(x) describing the shape of the effective surface of the sail-shaped flow shroud means over an x-axis set in longitudinal axis direction has a second derivative $d^2f/dx^2$ in accordance with

$$d^2f/dx^2 > 0$$

for at least a part of the flow shroud means behind the turbine plane.

3.   Device for extracting energy from a fluid flow passing in a first direction,

a) comprising at least one turbine embedded in the fluid flow, the fluid flow maintaining a pressure difference between the input end of the turbine and the output end of the turbine;

b) the turbine being at least partially shielded by a flow shroud means;

c) said flow shroud means effecting an increase of said pressure difference by causing a partial area of the cross section of the total fluid flow to bypass the turbine;

d) the bypassing flow being deflected by said flow shroud means into a second direction different from the first direction; and

e) said flow shroud means consisting of at least one flow shroud element shaped like a plate.

4.   Device for extracting energy from a fluid flow passing in a first direction,

a) comprising at least one turbine embedded in the fluid flow, the fluid flow maintaining a pressure difference between the input end of the turbine and the output end of the turbine;

b) the turbine being at least partially shielded by a flow shroud means;

c) said flow shroud means effecting an increase of said pressure difference by causing a partial area of the cross section of the total fluid flow to bypass the turbine;

d) the bypassing flow being deflected by said flow shroud means into a second direction different from the first direction; and

e) said flow shroud means consisting of at least one flow shroud means element shaped like a sail and of at least one flow shroud element shaped like a plate.

5.   Device for extracting energy from a fluid flow according to one of the claims 1 to 4, **characterised in that** at least two flow shroud elements are arranged in an echelon pattern.

6.   Device for extracting energy from a fluid flow according to one of the claims 1 to 5, **characterised in that** the turbine is shielded by said shroud means with regard to a predetermined radial solid angle $\alpha$ where $1° \leq \alpha \leq 360°$.

7.   Device for extracting energy from a fluid flow according to claim 6, **characterised in that** the mass flow $f_{bypass}$ bypassing the turbine is at least

$$f_{bypass} = 0.2\, f_{turbine}\, \alpha\, /\, 360°$$

wherein $f_{turbine}$ indicates the mass flow through the turbine.

8. Device for extracting energy from a fluid flow according to one of the claims 1 to 5, **characterised in that**

the inflow thereof has a cross section $A_1$ where the fluid flow enters the inflow at a velocity $v_1$;

said shroud means forms a flow area of a narrow cross section $A_2$ with $A_1 > A_2$;

the velocity $v_{narrow}$ of the flow close to the wall of the shroud within flow area of said narrow cross section is

$$v_{narrow} \geq 1.2 \cdot v_1 \cdot (A_1/A_2)$$

9. Device for extracting energy from a fluid flow according to one of the claims 1 to 8, **characterised in that** the flow shroud means comprises a flexible skin supported by a rigid support structure.

10. Device for extracting energy from a fluid flow according to claim 9, **characterised in that** the flexible skin is a woven fabric.

11. Device for extracting energy from a fluid flow according to claim 9, **characterised in that** the flexible skin is a foil sheet made of a plastics material.

12. Device for extracting energy from a fluid flow according to one of the claims 1 to 8, **characterised in that** the flow shroud means comprises a self-supporting rigid skin.

13. Device for extracting energy from a fluid flow according to claim 12, **characterised in that** the self-supporting rigid skin is made of plastics and/or metal.

14. Device for extracting energy from a fluid flow according to one of the claims 1 to 13, **characterised in that**

· said flow shroud means form a part of an elongated flow tube, and
· the turbine being located within the flow tube.

15. Device for extracting energy from a fluid flow according to one of the claims 1 to 13, **characterised in that**

· said flow shroud means form a part of an elongated flow channel,
· the flow channel having an upper side which is at least partially open, and
· the turbine being located within the flow channel.

16. Device for extracting energy from a fluid flow according to one of the claims 1 to 15, **characterised in that** the turbine comprises at least two turbine propeller means.

110

120

wind

x-axis

130

Fig.1a

120

140

wind

130

Fig. 1b

120

150

wind

130

Fig. 1c

Figure 1 d

wind →

212a

~ 214a

~ 214b

210 ~

210 ~

Figure 2a

~ 214c

212b

~ 214d

(Variant I)

(Variant II)

-216a

~ 218a

~ 218b

210 ~

210 ~

Figure 2b

~ 218c

216b

~ 218d

(Variant I)

(Variant II)

220a

~ 222a

~ 222b

210 ~

210 ~

Figure 2c

~ 222c

220b

~ 222d

(Variant I)

(Variant II)

~ 224a

~ 224b

210 ~

~ 224c

~ 224d

Fig. 2d

Figure 2e

210

225

Fig.2f

210

~ 250

330   335   325   310

310

330   335   325

340

Fig. 3A

311

330   335   ~ 325

~ 341

320   ~ 340

~ 341

330   335   ~ 325

Fig. 3B

Fig. 3d

— 415a

~ 415b

flow

410

— 415c

— 415d

Figure 4

Figure 5

flow

610

605a  605b  605c  605d  605e  605f

610

A

610

605a  605b  605d  605d  605e  605f

Figure 6

Fig. 7

810

−820

815

wind

Fig. 8

Region "behind the plane described by the propeller .of the turbine in the direction of the x-axis."

Fig. 9

101

flow

105

110

A2

A3

Fig. 10a

121

120

flow

A1

A2

A3

122

123

Fig. 10B

A1

A2

A3

A2

A3

Fig. 10G

EP 1 359 320 A1

**European Patent Office**

## EUROPEAN SEARCH REPORT

Application Number

EP 02 00 8032

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | "A new design for the wind turbine", F.Bet & H. Grassmann. 24/08/2001, www.fisica.uniud.it/grassmann/windenergy/newturbine.ps XP002212422 * the whole document * | 1,2,5-8 | F03D1/04 F03D3/04 |
| X,D | F.BET , H. GRASSMANN: "Upgrading conventional wind turbines" RENEWABLE ENERGY, 'Online! vol. 28, no. 1, 1 January 2003 (2003-01-01), pages 71-78, XP002212421 Retrieved from the Internet: <URL:(http://www.sciencedirect.com/science/article/B6V4S-44R2ND5-1/1/147af7795e2cb747cc64ffe3862c29b2)> 'retrieved on 2002-09-05! ** Available ONLINE on 21 December 2001 ** * the whole document * | 1,2,5-8 | |
| X | EP 0 935 068 A (GRASSMANN HANS) 11 August 1999 (1999-08-11) | 1,2,5-8 | TECHNICAL FIELDS SEARCHED (Int.Cl.7) F03D |
| Y | * abstract * * column 3, line 50 - line 53 * * column 4, line 10 - column 5, line 18 * * column 8, line 18 - line 51; figures 4D-4F * | 3,4,9-16 | |
| Y | PATENT ABSTRACTS OF JAPAN vol. 2000, no. 01, 31 January 2000 (2000-01-31) & JP 11 270455 A (EBARA CORP), 5 October 1999 (1999-10-05) * abstract * | 3,4,15 | |

-/--

The present search report has been drawn up for all claims

| Place of search | Date of completion of the search | Examiner |
|---|---|---|
| THE HAGUE | 5 September 2002 | Criado Jimenez, F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

22

European Patent
Office

**EUROPEAN SEARCH REPORT**

Application Number

EP 02 00 8032

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y | US 4 720 640 A (ANDERSON BJORN M S ET AL) 19 January 1988 (1988-01-19) * abstract * * column 14, line 33 - line 44 * | 9-13 | |
| Y | US 4 320 304 A (KARLSSON JAN ET AL) 16 March 1982 (1982-03-16) * figure 3 * | 14 | |
| Y | US 3 740 565 A (WESLEY N) 19 June 1973 (1973-06-19) * abstract; figure 1 * | 16 | |
| X | WO 00 50769 A (RICHARDS PETER JOHN ;FLAY RICHARD GEORGE JAMES (NZ); VORTEC ENERGY) 31 August 2000 (2000-08-31) * abstract * * page 2, line 21 - line 24 * * page 9, line 19 - line 25; figure 14 * | 1,2 | |
| X | FR 2 425 002 A (SNECMA) 30 November 1979 (1979-11-30) * page 7, line 3 - line 7; figure 5 * | 1,2 | TECHNICAL FIELDS SEARCHED (Int.Cl.7) |
| X | DE 201 09 480 U (KUSAN KRISTIAN) 25 October 2001 (2001-10-25) * figure 1 * | 1,2 | |

The present search report has been drawn up for all claims

| Place of search | Date of completion of the search | Examiner |
|---|---|---|
| THE HAGUE | 5 September 2002 | Criado Jimenez, F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 02 00 8032

This annex lists the patent family members relating to the patent documents cited in the above-mentioned European search report.
The members are as contained in the European Patent Office EDP file on
The European Patent Office is in no way liable for these particulars which are merely given for the purpose of information.

05-09-2002

| Patent document cited in search report | | Publication date | Patent family member(s) | | Publication date |
|---|---|---|---|---|---|
| EP 0935068 | A | 11-08-1999 | IT | UD980010 A1 | 04-08-1999 |
| | | | EP | 0935068 A2 | 11-08-1999 |
| JP 11270455 | A | 05-10-1999 | NONE | | |
| US 4720640 | A | 19-01-1988 | NONE | | |
| US 4320304 | A | 16-03-1982 | SE | 434977 B | 27-08-1984 |
| | | | AU | 561099 B2 | 30-04-1987 |
| | | | AU | 4365479 A | 09-08-1979 |
| | | | BE | 873769 A1 | 16-05-1979 |
| | | | CA | 1148477 A1 | 21-06-1983 |
| | | | DE | 2902830 A1 | 02-08-1979 |
| | | | DK | 36279 A | 31-07-1979 |
| | | | ES | 477284 A1 | 01-07-1979 |
| | | | FR | 2415729 A1 | 24-08-1979 |
| | | | GB | 2013790 A ,B | 15-08-1979 |
| | | | IT | 1166600 B | 05-05-1987 |
| | | | JP | 54141932 A | 05-11-1979 |
| | | | NL | 7900592 A | 01-08-1979 |
| | | | SE | 7801112 A | 31-07-1979 |
| | | | SU | 1218930 A3 | 15-03-1986 |
| | | | SE | 7900241 A | 11-07-1980 |
| | | | ZA | 7904122 A | 25-03-1981 |
| US 3740565 | A | 19-06-1973 | NONE | | |
| WO 0050769 | A | 31-08-2000 | NZ | 334382 A | 26-10-2001 |
| | | | AU | 2702600 A | 14-09-2000 |
| | | | WO | 0050769 A1 | 31-08-2000 |
| FR 2425002 | A | 30-11-1979 | FR | 2425002 A1 | 30-11-1979 |
| DE 20109480 | U | 25-10-2001 | DE | 20109480 U1 | 25-10-2001 |

EPO FORM P0459

For more details about this annex : see Official Journal of the European Patent Office, No. 12/82